# EUROPEAN PATENT SPECIFICATION

(11) **EP 1 788 285 B1**
(45) Date of publication and mention of the grant of the patent: **09.09.2009**
(21) Application number: 05110963.5
(22) Date of filing: 18.11.2005
(51) Int. Cl.: F16H 55/36, F02B 67/04

(54) **An internal combustion engine arrangement**
Brennkraftmaschinenanordnung
Agencement de moteur à combustion interne

(43) Date of publication of application: 23.05.2007
(73) Proprietor: Ford Global Technologies, LLC, Dearborn, MI 48126 (US)
(72) Inventor: Jönsson, Mikael, 439 94, Onsala (SE); Johansson, Claes-Göran, 43164 Mölndal (SE); Fängvall, Kjell, 42135 Västra Frölunda (SE)
(74) Representative: Andersson, Per Rune

(56) References cited:
- EP-A- 0 318 971
- WO-A-20/04011818
- US-A- 5 722 909
- US-A1- 2003 116 117

## Description

### FIELD OF THE INVENTION:

The present invention relates to an internal combustion engine arrangement, comprising an internal combustion engine mounted adjacent to a gearbox, and at least a first auxiliary unit and a second auxiliary unit arranged to be powered by means of said engine and being mounted in connection with said engine and gearbox.

### BACKGROUND OF THE INVENTION:

In the field of vehicles, for example cars, it is previously known to arrange an internal combustion engine in an engine compartment. A conventional internal combustion engine comprises an engine block with a number of cylinders which are arranged according to a particular configuration. For example, the cylinders can be arranged in an in-line configuration, a V configuration or a Boxer configuration. All these engine configurations are well known.

In the case of an engine being designed with an in-line configuration, for example with four, five or six cylinders which are aligned along a single row, the engine can be mounted in a car's engine compartment in the longitudinal direction, i.e. in a manner so that the longitudinal direction of the engine (i.e. the direction of the engine's crankshaft) extends in generally the same direction as the longitudinal direction of the car. In modern cars, it is also common to arrange an in-line engine in a transverse manner, i.e. in a "side-to-side" manner wherein the engine's crankshaft is oriented in a direction which is generally transverse with respect to the longitudinal direction of the car. This is particularly common in cars adapted for front wheel drive.

An arrangement comprising an engine which is mounted in the transverse manner is subject to strict requirements regarding the maximum allowable length of the engine. Obviously, this is due to the maximum available width of the engine compartment, which normally offers a very limited available space. An in-line six cylinder engine, for example, must be made relatively short in order to fit within the width of the engine compartment.

Furthermore, an internal combustion engine is normally associated with a gearbox, which is suitably mounted as an extension of the engine, i.e. in the longitudinal direction of the engine. Obviously, the dimensions of the gearbox also contribute to the total length of the complete engine arrangement. In the case of an engine which is mounted in the transverse manner, the complete length of the engine and gearbox arrangement must consequently be designed to be as short as possible in order to fit within the given space defined by the engine compartment.

Also, it is common in today's cars to use one or more auxiliary units, i.e. accessory units such as a pump for a coolant in an engine cooling system, a hydraulic pump for a power assisted steering system, a compressor for an air conditioning unit etc. As is previously known, such auxiliary units are operated by means of the power which is generated by the engine. In this regard, it is previously known that such auxiliary units can be operated by means of a power transmission unit coupled to the engine's crankshaft. Consequently, power is transmitted from an engine's crankshaft, via pulleys and a belt drive, to each auxiliary unit.

It can often be expected that such auxiliary units, as well as additional components for power transmission from the crankshaft to each auxiliary unit, will further increase the necessary space for the engine arrangement in a vehicle. Also, as mentioned above, it should be noted that in those cases where the engine is mounted in the transverse manner, space is more limited than the case with longitudinally mounted engines. For this reason, it is previously known to arrange one or more of the auxiliary units on top of the engine or the gearbox, i.e. so that the auxiliary units do not add anything to the total length or width of the complete engine arrangement. Instead, the auxiliary units are mounted above the gearbox or engine.

With reference to prior art, it can be noted that the patent document US 6631702 teaches an internal combustion engine arrangement addressing the general problem of obtaining a compact engine and gearbox arrangement for transverse mounting in a vehicle. According to said document, certain auxiliary units are situated above the gearbox.

Although the arrangement according to US 6631702 operates in a satisfactory manner, there is an increasing demand for further improvements in the field of transversely mounted engine arrangements, in particular in order to provide space-saving and practical arrangements for mounting of auxiliary units.

Furthermore, the closest prior art document US 5722909 teaches a decoupler joint for a belt drive in a vehicle. The decoupler joint comprises a driving pulley, a driven pulley and a flexible rubber core which is coupled between the driving pulley and the driven pulley.

### SUMMARY OF THE INVENTION:

An object of the present invention is consequently to provide an internal combustion engine arrangement which is designed to be space-saving, practical and cost-effective and which also solves the above-mentioned problems of fitting auxiliary units forming part of the engine arrangement into an engine compartment having a limited available space.

This object is obtained by means of an arrangement as initially mentioned, the characterizing features of which are indicated in subsequent claim 1.

By means of the invention, certain advantages can be accomplished. Firstly, it can be noted that the auxiliary units concerned are packaged in a very compact manner. This is accomplished primarily as a result of the auxiliary units being mounted above, i.e. on top of, the gearbox and also by using one single drive pulley for commonly operating two different auxiliary units in the manner described above. Furthermore, the coupling device according to the invention is easily mountable and dismountable. Also, the coupling device is preferably based on either a solution involving a helical spring element, or the use of at least one resilient block, in order to transmit power from the drive pulley to the second auxiliary unit. As a result, any misalignment between the drive pulley and the second auxiliary unit, in the form of angular misalignment or parallel offset misalignment, can be effectively absorbed by the coupling device.

### BRIEF DESCRIPTION OF DRAWINGS:

In the following, the invention will be described with reference to the appended drawings, wherein:
- Fig. 1: is a perspective view of an engine and gearbox arrangement in which the present invention is used;
- Fig. 2: is a schematic drawing which shows the manner in which power is transmitted from the engine to one or several auxiliary devices;
- Fig. 3: is a perspective view showing the present invention, in an exploded view and according to a first embodiment;
- Fig. 4: is a further perspective view of the embodiment as shown in Fig. 3;
- Fig. 5: is a perspective view generally corresponding to Figs. 3 and 4, but showing a second embodiment of the invention; and
- Fig. 6: is a cross-sectional side view of the second embodiment of the invention.

### DESCRIPTION OF A PREFERRED EMBODIMENT:

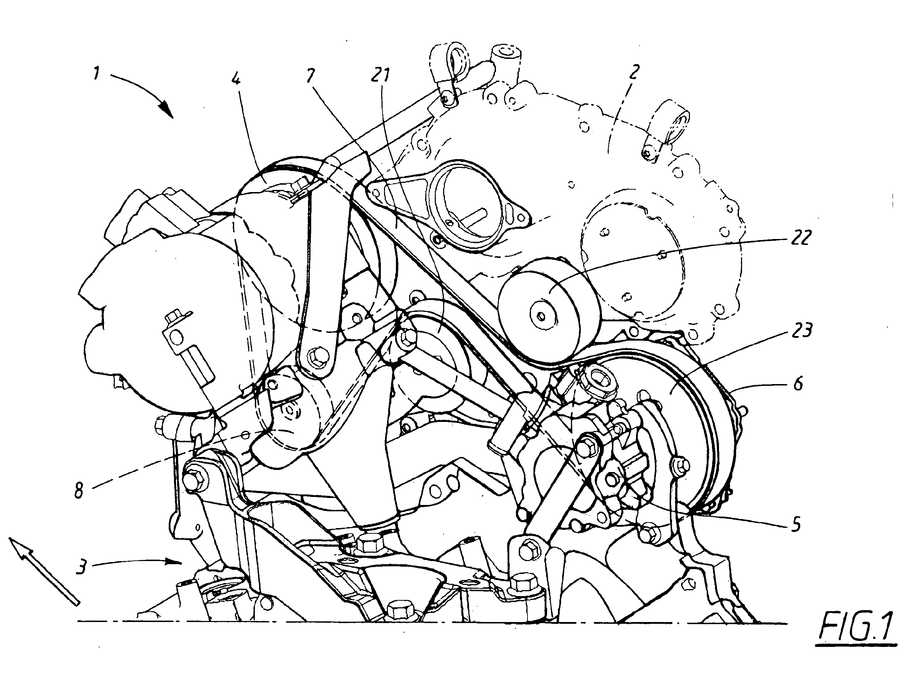

Fig. 1 shows a perspective view of an internal combustion engine arrangement 1 for a vehicle, suitably a car, in which the present invention can be used. Generally, the invention can be used for any type of internal combustion engine, but the invention is particularly advantageous to be used together with engines of the in-line type which are furthermore intended to be transversely mounted in a vehicle. In other words, the invention is particularly suitable for engines which extend along a lengthwise direction which is generally transverse with respect to the longitudinal direction of the vehicle in question. Also, the lengthwise direction of the engine corresponds generally to the direction along which the engine's crankshaft (not shown) extends.

Consequently, the engine arrangement 1 according to Fig. 1 comprises an engine 2 which is intended to be mounted in a transverse manner with respect to the longitudinal direction of a vehicle. The forward direction of such a vehicle is indicated in Fig. 1 by means of an arrow. This means that the view according to Fig. 1 is a slightly angled perspective view from the rear of the engine arrangement 1.

As mentioned above, the engine 2 is suitably in the form of a conventional internal combustion engine, and can either be an engine of the spark ignition type (SI engine) or an engine of the compression ignition type (CI engine). In the embodiment which will now be described, it will be assumed that the engine 2 is of the spark ignition type, having an in-line configuration, for example with four, five or six cylinders arranged in a single row.

Furthermore, the engine 2 is associated with a gearbox 3. In a manner which is known as such, the gearbox 3 is arranged in the form of a lengthwise extension of the engine 2. The general operation of the engine 2 and the gearbox 3 is well known and for this reason it will not be described in detail here.

Due to the fact that the engine 2 is intended to be mounted transversely with respect to the longitudinal direction of the vehicle, it is crucial that the dimensions of the entire engine arrangement 1, i.e. including the engine 2 and the gearbox 3, are kept within certain limits which are determined by the available space in the engine compartment (not shown) of the vehicle in question. In particular, the total length of the engine arrangement 1 including the engine 2 and the gearbox 3 along the transverse direction of the vehicle must be minimized in order for the engine arrangement 1 to fit into such an engine compartment. This requirement is obviously in contrast to the necessary length of the engine 2, in particular in those cases where the engine 2 comprises a relatively large numbers of cylinders arranged in-line, for example five or six cylinders.

The engine arrangement 1 furthermore comprises a number of auxiliary units, i.e. accessories in the form of pumps, compressors and similar devices, which are necessary for the operation of various functions within the engine arrangement and the vehicle. According to what is previously known as such, such auxiliary devices can be constituted for example by a hydraulic pump for a power assisted steering system in the vehicle, a pump for circulating a cooling medium in the engine arrangement 1, a vacuum generating device and a compressor for an air conditioning system in the vehicle. The invention is not limited to be used with any particular type or number of such auxiliary devices. In fact, the principles of the invention can be applied to any engine arrangement having auxiliary units powered by the engine.

In the embodiment shown in Fig. 1, three such auxiliary devices are shown, i.e. an air conditioning system compressor 4, a servo pump 5 for a power-assisted steering system in the vehicle, and a coolant pump 6 for circulating a coolant within a cooling system in the engine arrangement 1.

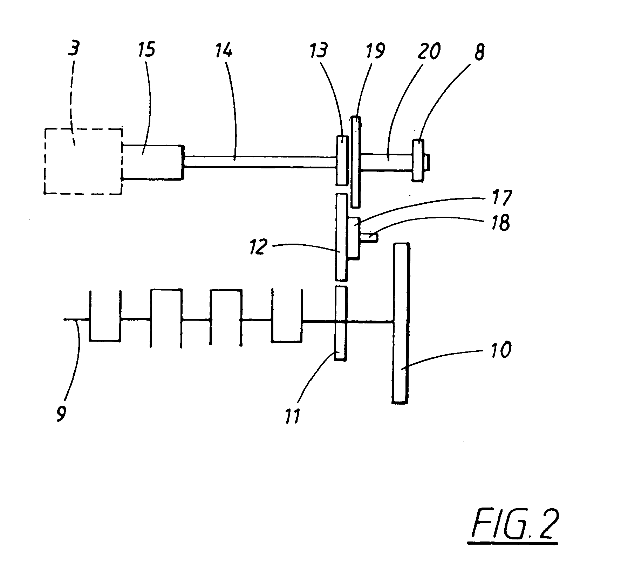

According to this particular embodiment, the auxiliary units 4, 5, 6 are operated by means of a pulley belt 7 of conventional type. The belt 7 is suitably a so-called poly-V belt, which in turn is driven by a drive pulley 8. In a manner which will now be briefly described with reference to Fig. 2, the drive pulley 8 is operated by power which is generated in the conventional manner by a crankshaft 9 arranged in the engine 2. The crankshaft 9 is provided with a flywheel 10 and also a first output gear wheel 11 which is non-rotatably mounted on the crankshaft 9. The first output gear wheel 11 meshes with a further, i.e. second, gear wheel 12, which in turn meshes with a second output gear wheel 13. The second output gear wheel 13 is arranged on a first output shaft 14. In this manner, the second gear wheel 12 transmits torque to the first output shaft 14. Said first output shaft 14 can be further connected, suitably via a pulse-damping coupling 15, to the gearbox 3. The gearbox 3 is merely indicated schematically in Fig. 2.

Furthermore, a third gear wheel 17 is mounted on the same input shaft 18 as the second gear wheel 12 and also meshes with a third output gear wheel 19 which is non-rotatably mounted on a second output shaft 20. According to the embodiment, the second output shaft 20 is rotatably journalled on the outside of and concentrically with the first output shaft 14.

By means of suitably chosen gear ratios between the second gear wheel 12, the second output gear wheel 13, the third gear wheel 17 and the third output gear wheel 19, the first output shaft 14 can be made to rotate at suitable speed, preferably a speed which is higher than the speed of the second output shaft 20.

Also, the above-mentioned drive pulley 8 (cf. Fig. 1) is non-rotatably arranged on the second output shaft 20. Consequently, the power which is necessary for operating the auxiliary units 4, 5, 6 is generated in the engine 1 and transmitted from the crankshaft 9 to the drive pulley 8 via the various transmission devices described with reference to Fig. 2.

In transversely mounted engines, and as mentioned above, it is of great importance that the length of the engine arrangement is kept to a minimum. For this reason, and with reference again to Fig. 1, the engine arrangement 1 according to this embodiment is arranged so that the auxiliary devices 4, 5, 6 are mounted generally on top of the gearbox 3. In other words, the auxiliary devices 4, 5, 6 are mounted above the gearbox 3 in a manner so that they do not add anything to the total length of the engine arrangement 1. Also, the drive pulley 8, being rotated by means of power transmitted from the crankshaft, is preferably also located above the gearbox 3, as indicated in Fig. 1.

Furthermore, according to this embodiment, the belt 7 is guided by means of two guiding rollers 21, 22 which serve to position the belt 7 in a correct manner. The belt 7 also extends over a second drive pulley 23, which is mounted between the servo pump 5 and the coolant pump 6. As will be described in greater detail below, the servo pump 5 and the coolant pump 6 are operated commonly via the second drive pulley 23.

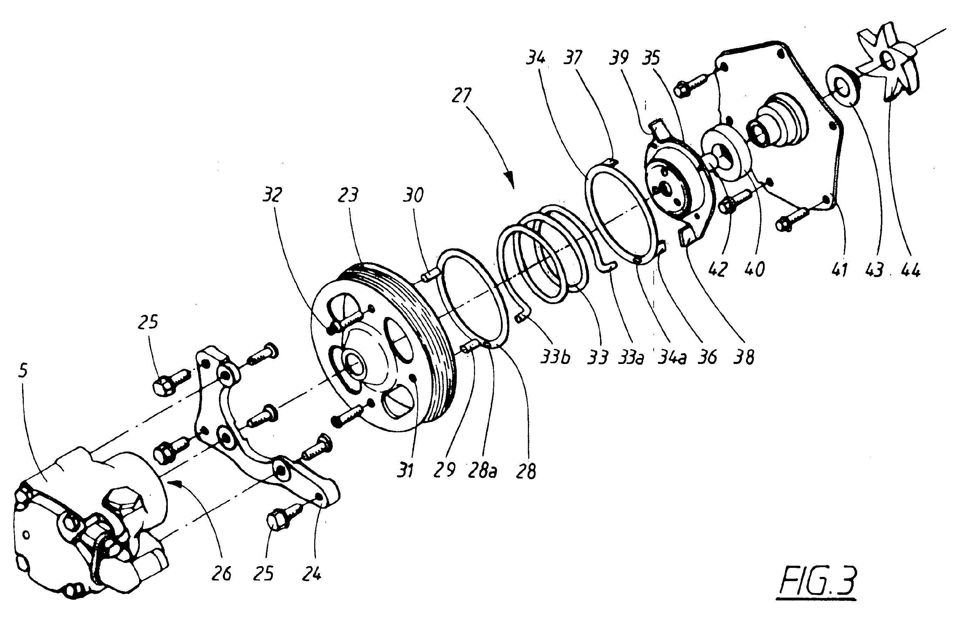

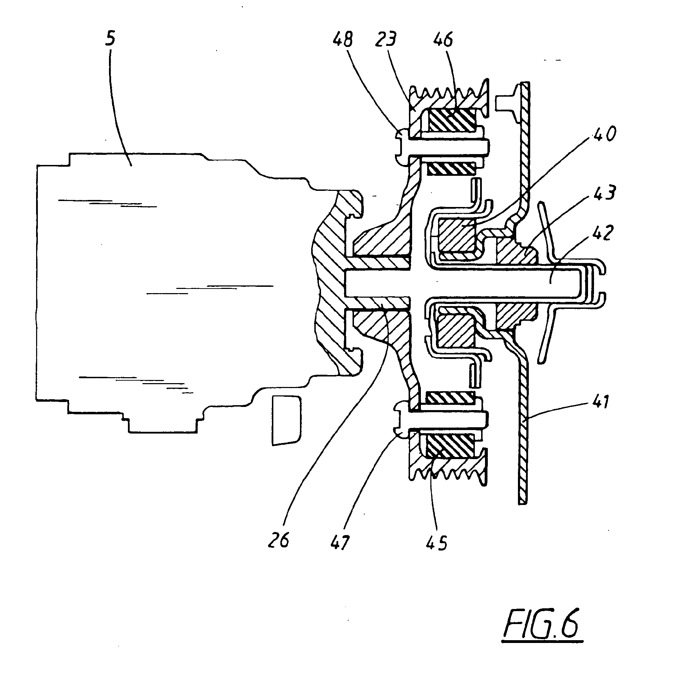

The principles of the present invention will now be described in detail with reference to Fig. 3, which is a perspective view showing the invention in an exploded view and according to a first embodiment. As shown in Fig. 3, the servo pump 5 is arranged to be mounted on the engine arrangement 1 by means of a bracket 24 and a number of fastening screws 25. The mounting of this bracket 24 in a suitable position on the engine arrangement 1 is not described in detail. Furthermore, the servo pump 5 comprises a pump shaft 26 (not visible in Fig. 3 but shown in Fig. 6) which is connected to the second drive pulley 23 so that rotation of the second drive pulley 23 causes the servo pump 5 to be operated.

The opposite side of the second drive pulley 23, i.e. the side of the second drive pulley 23 facing the coolant pump 6, accommodates a coupling device which according to this embodiment is constituted by a spring coupling 27. More precisely, the spring coupling 27 comprises a circular ring 28 having two projections or studs 29, 30. These projections 29, 30 cooperate with corresponding holes 31, 32 in the second drive pulley 23. Furthermore, the circular ring 28 is connected to a helically shaped spring 33 which in turn is connected to a second circular ring 34. This is suitably obtained by providing the second circular ring 34 with a hole 34a in which the corresponding end section 33a of the spring fits. A corresponding arrangement is provided in the opposite end section 33b of the spring, i.e. said opposite end section 33b cooperates with a further hole 28a in the first mentioned circular ring 28.

The second ring 34 is arranged so as to cooperate with a pump hub 35 forming part of the pump 6. In particular, the second ring 34 is shaped with two projections 36, 37 which are designed so as to cooperate with two flanges or wings 38, 39 forming part of the coolant pump hub 35.

The coolant pump hub 35 is rotatably mounted, via a bearing 40, to a housing 41. Furthermore, the pump hub 35 is also provided with a shaft 42 which extends through the housing 41 and is connected, via a sealing 43 to keep coolant from leaking out, to an impeller 44 also forming part of the coolant pump 6. The operation of a pump for circulating an engine coolant through a cooling system of an internal combustion engine arrangement is well known, and for this reason it is not described in detail here.

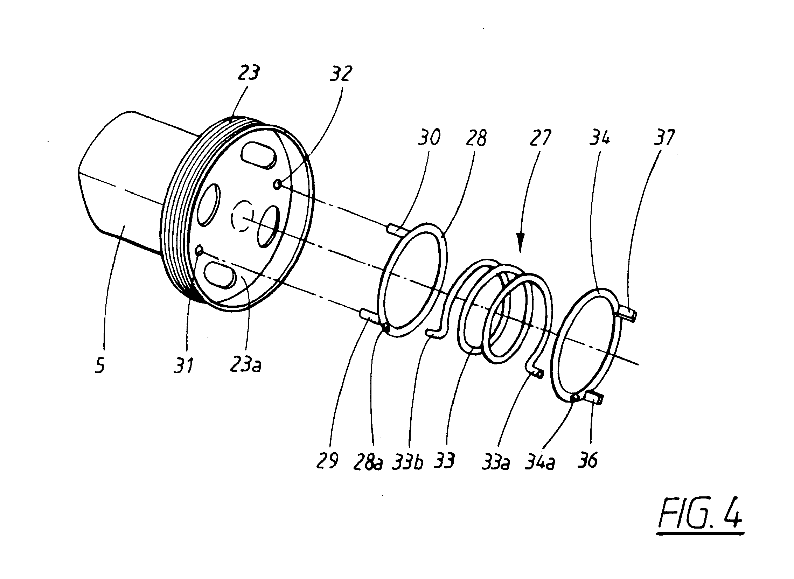

With reference to Fig. 4, which is a perspective view regarded from another direction than Fig. 3, it can be noted that the second drive pulley 23 is suitably formed as a circular wheel which forms an internal space in which the coupling device 27 can be accommodated. As mentioned above, the coupling device 27 according to the embodiment is constituted by a spring coupling 27 comprising a ring 28 with two projections or studs 29, 30. These projections 29, 30 are designed to fit into two corresponding holes 31, 32 in the side portion 23a of the second drive pulley 23. This means that when the second drive pulley 23 is rotated, the ring 28 will also be rotated. The ring 28 is connected to a spring 33, which in turn will cause the second ring 34 to rotate. As mentioned above, the second ring 34 will cause rotation of the coolant pump hub 35.

A particular advantage of the coupling device 27 according to the invention is that it operates as a spring which may even out changes in torque as a result of the power being imposed by the second drive pulley 23. Also, in case of any misalignment between the second drive pulley 23 and the coolant pump 6, i.e. in the form of angular misalignment or parallel offset misalignment between these component, this can be absorbed by the coupling device 27. In other words, the coupling between the second drive pulley 23 and the coolant pump 6 provided by the invention is flexible in the sense that it does not require any close tolerances. This is another advantage of the invention.

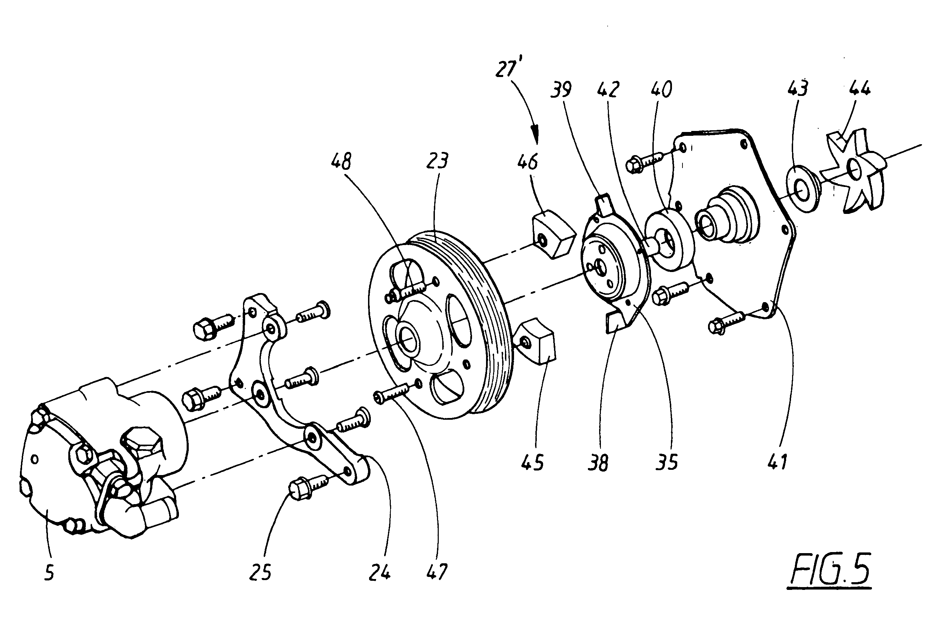

With reference to Fig. 5, a second embodiment of the present invention is shown. Parts in the embodiment according to Figs. 3 and 4 which are the same as corresponding parts in Fig. 5 are indicated with the same reference numerals. It can be noted that the embodiment according to Fig. 5 is based on a coupling device 27' which consists of two blocks 45, 46 of resilient material, suitably rubber. These rubber blocks 45, 46 are fixed on the inside of the second drive pulley 23, preferably by means of two screws 47, 48. In a manner which is similar to the embodiment shown in Fig. 3, the rubber blocks 45, 46 are arranged to cooperate with the flanges or wings 38, 39 on the coolant pump hub 35 so as to drive the coolant pump 6.

Consequently, and with reference also to the cross-sectional view of Fig. 6 which shows the same embodiment as Fig. 5, it can be noted that the present invention provides a combined driving arrangement for both the servo pump 5 and the coolant pump 6. In particular, the drive apparatus for the two pumps 5, 6 are designed in a relatively thin and space-saving manner, which makes it suitable for use in engine arrangements wherein there are hard requirements as regards the available space in the engine compartment. Also, as already mentioned with reference to Fig. 4, the arrangement according to the invention will be suitable even when there is slight misalignment or large tolerances in the coupling between the second drive pulley 23 and the two pumps 5, 6. Furthermore, the resiliency of the blocks 45, 46 is used for absorbing vibrations and variations in torque originating from, for example, the second drive pulley 23.

In particular, the cross-sectional view of the second embodiment shown in Fig. 6 indicates that the coupling device 27' is arranged inside a space defined by the interior of the second drive pulley 23. This contributes to the compact and space-saving driving arrangement for both the servo pump 5 and the coolant pump 6.

The present invention is not limited to the above-mentioned embodiment, but can be varied within the scope of the appended claims. For example, the invention is suitable for all types of engine arrangements, for example in cars, buses, lorries and also in watercraft. Furthermore, the coupling device can be formed in various ways, for exampel in the form of a spring-type coupling element or with rubber blocks, as described above. Alternatively, the coupling device can also be made in a contact-less manner, i.e. having magnetical devices arranged for transmitting power from the second drive pulley 23 to the coolant pump 6.

Furthermore, the invention can be used in engine arrangements intended to be mounted in both the transverse and longitudinal manner. Also, the invention is not limited to be used for any particular set of auxiliary devices. Also, it is not necessary that the auxiliary devices concerned are mounted on top of a gearbox.

## Claims

1. An internal combustion engine arrangement (1), comprising an internal combustion engine (2) mounted adjacent to a gearbox (3), and at least a first auxiliary unit (5) and a second auxiliary unit (6) arranged to be powered by means of said engine (2) and being mounted in connection with said engine (2) and gearbox (3), **characterized in that** said at least two auxiliary units (5, 6) are operated commonly via a drive pulley (23) which is powered by said engine (2), that said first anxiliary unit (5) and said second anxiliary unit (6) are mounted on opposite sides of said drive pulley (23), said drive pulley (23) being connected to said first auxiliary unit (5) and said drive pulley (23) also accommodating a coupling device (27; 27') which is connected to said second auxiliary unit (6), and wherein said coupling device (27; 27') comprises means (33; 45, 46) for absorbing misalignment between said drive pulley (23) and the second auxiliary unit (6).

2. An internal combustion engine arrangement (1) according to claim 1, **characterized in that** said coupling device (27) comprises a resilient spring element (33) for transmitting power from said drive pulley (23) to said second auxiliary unit (6).

3. An internal combustion engine arrangement (1) according to claim 1, **characterized in that** coupling device (27') comprises at least one resilient block (45, 46) being mounted on said drive pulley (23) and being adapted for transmitting power from said drive pulley (23) to said second auxiliary unit (6).

4. An internal combustion engine arrangement (1) according to any one of the preceding claims, **characterized in that** said auxiliary units (5, 6) are mounted above said gearbox (3).

5. An internal combustion engine arrangement (1) according to any one of the preceding claims, **characterized in that** said coupling device (27; 27') is arranged for absorbing misalignment of the coupling between said drive pulley (23) and said first and second auxiliary units (5, 6).

6. An internal combustion engine arrangement (1) according to any one of the preceding claims, **characterized in that** said first auxiliary unit (5) is a hydraulic pump for a power assisted steering system, and that said second auxiliary unit (6) is a pump for an engine coolant.

7. An internal combustion engine arrangement (1) according to any one of the preceding claims, **characterized in that** said engine (2) is arranged to be mounted in a transverse manner in a vehicle.

## Patentansprüche

1. Verbrennungskraftmaschinenanordnung (1), umfassend eine Verbrennungskraftmaschine (2), die benachbart zu einem Getriebe (3) angeordnet ist, und zumindest eine erste Hilfseinheit (5) und eine zweite Hilfseinheit (6), die angeordnet sind um mittels der Maschine (2) angetrieben zu werden, und die in Verbindung mit der Maschine (2) und dem Getriebe (3) montiert sind,
**dadurch gekennzeichnet, dass**
die zumindest zwei Hilfseinheiten (5, 6) gemeinsam mittels einer Antriebsscheibe (23) betrieben werden, die durch die Maschine (2) angetrieben ist, wobei die erste Hilfseinheit (5) und die zweite Hilfseinheit (6) auf gegenüberliegenden Seiten der Antriebsscheibe (23) montiert sind, wobei die Antriebsscheibe (23) mit der ersten Hilfseinheit (5) verbunden ist und die Antriebsscheibe (23) ebenfalls eine Kupplungseinrichtung (27, 27') aufnimmt, die mit der zweiten Hilfseinheit (6) verbunden ist, und bei der die Kupplungseinrichtung (27, 27') Mittel (33; 45, 46) zum Absorbieren einer Fehlausrichtung zwischen der Antriebsscheibe (23) und der zweiten Hilfseinheit (6) umfasst.

2. Verbrennungskraftmaschinenanordnung (1) nach Anspruch 1, **dadurch gekennzeichnet, dass** die Kupplungseinrichtung (27) ein rückstellfähiges Federelement (33) zum Übertragen von Energie von der Antriebsscheibe (23) zu der zweiten Hilfseinheit (6) umfasst.

3. Verbrennungskraftmaschinenanordnung (1) nach Anspruch 1, **dadurch gekennzeichnet, dass** die Kupplungseinrichtung (27) zumindest einen rückstellfähigen Block (45, 46) umfasst, der an der Antriebsscheibe (23) montiert ist und zum Übertragen von Energie von der Antriebsscheibe (23) zu der zweiten Hilfseinheit (6) eingerichtet ist.

4. Verbrennungskraftmaschinenanordnung (1) nach einem der vorhergehenden Ansprüche, **dadurch gekennzeichnet, dass** die Hilfseinheiten (5, 6) über dem Getriebe montiert sind.

5. Verbrennungskraftmaschinenanordnung (1) nach einem der vorhergehenden Ansprüche, **dadurch gekennzeichnet, dass** die Kupplungseinrichtung (27, 27') zum Absorbieren der Fehlausrichtung der Kupplung zwischen der Antriebsscheibe (23) und der zweiten Hilfseinheit (6) angeordnet ist.

6. Verbrennungskraftmaschinenanordnung (1) nach einem der vorhergehenden Ansprüche, **dadurch gekennzeichnet, dass** die erste Hilfseinheit (5) eine hydraulische Pumpe für ein Servolenkungsystem ist und dass die zweite Hilfseinheit (6) eine Pumpe für Maschinenkühlmittel ist.

7. Verbrennungskraftmaschinenanordnung (1) nach einem der vorhergehenden Ansprüche, **dadurch gekennzeichnet, dass** die Maschine (2) so angeordnet ist, dass sie in einer querverlaufenden Weise in ein Fahrzeug montiert wird.

## Revendications

1. Agencement de moteur à combustion interne (1), comprenant un moteur à combustion interne (2) monté de manière adjacente à une boîte de vitesses (3), et au moins un premier groupe auxiliaire (5) et un deuxième groupe auxiliaire (6) agencés pour être alimentés au moyen dudit moteur (2) et étant montés en relation avec ledit moteur (2) et la boîte de vitesses (3), **caractérisé en ce que** lesdits au moins deux groupes auxiliaires (5, 6) sont actionnés en commun par une poulie d'entraînement (23) qui est entrainée par ledit moteur (2), **en ce que** ledit premier groupe auxiliaire (5) et ledit deuxième groupe auxiliaire (6) sont montés sur des côtés opposés de ladite poulie d'entraînement (23), ladite poulie d'entraînement (23) étant reliée audit premier groupe auxiliaire (5) et ladite poulie d'entraînement (23) recevant en outre un dispositif de couplage (27 ; 27') qui est relié audit deuxième groupe auxiliaire (6), et où ledit dispositif de couplage (27 ; 27') comprend des moyens (33 ; 45, 46) pour absorber un désalignement entre ladite poulie d'entraînement (23) et le deuxième groupe auxiliaire (6).

2. Agencement de moteur à combustion interne (1) selon la revendication 1, **caractérisé en ce que** ledit dispositif de couplage (27) comprend un élément de ressort élastique (33) pour transmettre l'énergie de ladite poulie d'entraînement (23) audit deuxième groupe auxiliaire (6).

3. Agencement de moteur à combustion interne (1) selon la revendication 1, **caractérisé en ce que** ledit dispositif de couplage (27') comprend au moins un bloc élastique (45, 46) monté sur ladite poulie d'entraînement (23) et adapté pour transmettre l'énergie de ladite poulie d'entraînement (23) audit deuxième groupe auxiliaire (6).

4. Agencement de moteur à combustion interne (1) selon l'une quelconque des revendications précédentes, **caractérisé en ce que** lesdits groupe auxiliaires (5, 6) sont montés au-dessus de ladite boîte de vitesses (3).

5. Agencement de moteur à combustion interne (1) selon l'une quelconque des revendications précédentes, **caractérisé en ce que** ledit dispositif de couplage (27 ; 27') est agencé pour absorber un désalignement du couplage entre ladite poulie d'entraînement (23) et lesdits première et deuxième groupes auxiliaires (5, 6).

6. Agencement de moteur à combustion interne (1) selon l'une quelconque des revendications précédentes, **caractérisé en ce que** ledit premier groupe auxiliaire (5) est une pompe hydraulique pour un système de direction assistée, et **en ce que** ledit deuxième groupe auxiliaire (6) est une pompe pour le liquide de refroidissement du moteur.

7. Agencement de moteur à combustion interne (1) selon l'une quelconque des revendications précédentes, **caractérisé en ce que** ledit moteur (2) est agencé pour être monté d'une manière transversale dans un véhicule.
